(19) Europäisches Patentamt
European Patent Office
Office européen des brevets

(11) **EP 3 390 525 B1**

(12) **EUROPEAN PATENT SPECIFICATION**

(45) Date of publication and mention
of the grant of the patent:
**03.07.2019 Bulletin 2019/27**

(51) Int Cl.:
***C08L 23/06*** *(2006.01)*    ***C08L 23/12*** *(2006.01)*

(21) Application number: **17768029.5**

(86) International application number:
**PCT/EP2017/071822**

(22) Date of filing: **31.08.2017**

(87) International publication number:
**WO 2018/041925 (08.03.2018 Gazette 2018/10)**

(54) **POLYOLEFIN BLENDS COMPRISING SINGLE-SITE CATALYST PRODUCED ISOTACTIC POLYPROPYLENE AND POLYETHYLENE, PROCESS AND ARTICLES MADE FROM THESE BLENDS**

POLYOLEFINMISCHUNGEN MIT DURCH SINGLE-SITE-KATALYSATOR HERGESTELLTEM ISOTAKTISCHEM POLYPROPYLEN UND POLYETHYLEN, VERFAHREN UND AUS DIESEN MISCHUNGEN HERGESTELLTE ARTIKEL

MÉLANGES DE POLYOLÉFINE COMPRENANT DU POLYPROPYLÈNE ET DU POLYÉTHYLÈNE SYNDIOTACTIQUE PRODUITS PAR CATALYSEUR MONOSITE, PROCÉDÉ ET ARTICLES FABRIQUÉS À PARTIR DESDITS MÉLANGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2016 EP 16186656**

(43) Date of publication of application:
**24.10.2018 Bulletin 2018/43**

(73) Proprietor: **TOTAL RESEARCH & TECHNOLOGY FELUY**
**7181 Seneffe (BE)**

(72) Inventors:
• **BOUVY, Claire**
 **7090 Braine-le-Comte (BE)**
• **LHOST, Olivier**
 **7021 Havre (BE)**
• **MICHEL, Jacques**
 **7181 Feluy (BE)**

(74) Representative: **Garcia Martin, Margarita**
**Total Research & Technology Feluy**
**Patent Department**
**Zone Industrielle Feluy C**
**7181 Seneffe (BE)**

(56) References cited:
WO-A1-00/11078      WO-A1-2004/022336
US-A1- 2005 142 367    US-B1- 6 407 171

**Description**

**Field of the invention**

The present invention relates to isotactic polypropylenes blended with polyethylenes. The invention also relates to articles produced from these blends as well as processes for producing these blends.

**Background of the invention**

Isotactic polypropylenes are known to provide an interesting balance of flexural modulus, melting temperature and processability for many applications. However, polypropylene articles easily break at low temperature, especially below 0 °C. Many applications that could take advantage of said interesting balance also require improved impact properties at sub-ambient temperatures, such as automobile parts.

Polypropylenes properties can be improved at low temperature with the introduction of a softer phase. For example, impact polypropylene corresponds to a mixture of a matrix of polypropylene with a dispersed Ethylene-Propylene Rubber (EPR) phase. Thanks to this additional phase, the low temperature impact properties are significantly improved with a reduced decrease of the flexural modulus. However, EPR content in impact polypropylene is often limited in order to maintain the production costs to a reasonable area. As a consequence, the low temperature impact properties improvement is limited in a similar way. When further improvement of the low temperature impact properties is targeted, blends of polypropylene (or impact polypropylene) with a soft polymer such as polyethylene or Ethylene-Propylene-Diene-Monomer rubber (EPDM) rubber, or blend of polymers may be considered.

In EP1495861 blends of polypropylene and metallocene polyethylene are reported to be an interesting option to produce high performance containers.

WO2000/11078 discloses a blend of polyethylene and Ziegler-Natta polypropylene grade. Final blends are characterized by a good balance of tensile toughness, elongation and modulus at -10 °C. However there is still a need for further improvement of the impact properties and/or the ductility of the compositions.

Thus, it is an object of the invention to provide an isotactic polypropylene containing material with an improved balance of rigidity and impact properties, including ductility.

It is also an object of the invention to provide an isotactic polypropylene containing material with an improved balance of rigidity, processability and impact properties, including ductility.

It is a further object of the invention to provide an isotactic polypropylene containing material with an improved balance of rigidity, processability and impact properties, including ductility and impact resistance at 23 °C and below 0 °C.

**Summary of the invention**

According to a first aspect, the invention provides a blend of at least one single-site catalyst polyethylene and at least one single-site catalyst isotactic polypropylene wherein the blend:

- comprises an isotactic polypropylene content ranging from 25 to 55 weight percent relative to the total weight of both the polyethylene and the polypropylene contained in the blend, and further wherein
- the at least one single-site catalyst polyethylene and the at least one single-site catalyst isotactic polypropylene are selected to fulfil the relationship:

$$MFI_{PP} = \alpha\ MI2_{PE}\ (I)$$

with $\alpha$ ranging from 2.0 to 9.0, $MI2_{PE}$ being the melt flow index of the polyethylene as measured according to ISO 1133 at 190 °C under a load of 2.16 kg and $MFI_{PP}$ being the melt flow index of the isotactic polypropylene as measured according to ISO 1133 at 230 °C under a load of 2.16 kg.

The single-site catalysts used in the invention are preferably metallocene catalysts.

Surprisingly it has been found that such blends of single-site catalyst isotactic polypropylene and single-site catalyst polyethylene in specific blend proportions combined with a specific melt index ratio (expressed by the $\alpha$ value) have an improved impact resistance at 23 °C and below 0 °C while maintaining or slightly improving other targeted properties. The inventive blends also provide improvements in ductility, especially when the failure mechanism is considered. The inventive blends provide, therefore, an improved balance in rigidity, impact properties, including ductility and impact resistance at both 23 °C and below 0 °C and processability.

With preference, one or more of the following features can be used to further define the inventive blend:

- $\alpha$ is at most 8.5, preferably at most 8.0, more preferably at most 7.5.
- $\alpha$ is at least 2.5, preferably at least 3.0, more preferably at least 3.5, and even more preferably at least 4.0.
- Said at least one single-site catalyst isotactic polypropylene has a content of mmmm pentads ranging from 70 % to 99 % as determined by $^{13}$C-NMR analysis, preferably from 80 to 98%, more preferably from 85 to 97%.
- The content of isotactic polypropylene is at most 53 wt% relative to the total weight of both the polyethylene and the isotactic polypropylene contained in the blend, preferably at most 50 wt%, more preferably at most 48 wt% and even more preferably at most 45 wt%.
- The content of the isotactic polypropylene is at least 30 wt% relative to the total weight of both polyethylene and isotactic polypropylene contained in the blend, preferably at least 35 wt% and more preferably at least 40 wt%.
- The isotactic polypropylene has a melt flow index ($MFI_{PP}$) ranging from 0.1 to 1000 g/10 min as measured according to ISO 1133 at 230 °C under a load of 2.16 kg, preferably 0.1 to 500 g/10 min.
- The isotactic polypropylene has a melt flow index ($MFI_{PP}$) of at most 100 g/10 min.
- The isotactic polypropylene has a melt flow index ($MFI_{PP}$) of at least 10 g/10 min, preferably of at least 12 g/10 min, and more preferably of at least 14 g/10 min as measured according to ISO 1133 at 230 °C under a load of 2.16 kg.
- The isotactic polypropylene is a homopolymer, a random copolymer of propylene and at least one comonomer or a mixture thereof.
- The isotactic polypropylene has a melting temperature of at most 155 °C, preferably of at most 153 °C as determined according to ISO 3146.
- The polyethylene and/or the isotactic polypropylene have a monomodal molecular weight distribution.
- Both the polyethylene and the isotactic polypropylene have a molecular weight distribution Mw/Mn of at most 5, preferably of at most 4, more preferably of at most 3.5.
- Both the polyethylene and the isotactic polypropylene have a molecular weight distribution Mw/Mn of at least 2.0, preferably of at least 2.1.
- The polyethylene has a MI2 of at least 0.5 g/10 min, more preferably of at least 1 g/10 min, even more preferably of at least 1.2 g/10 min and most preferably of at least 1.5 g/10 min as measured according to ISO 1133 at 190 °C under a load of 2.16 kg.
- The polyethylene has a density of at least 0.850 g/cm$^3$, more preferably of at least 0.900 g/cm$^3$, even more preferably of at least 0.910 g/cm$^3$ and most preferably of at least 0.915 g/cm$^3$ as determined according to ISO 1183 at a temperature of 23 °C.
- At least one single-site catalyst catalysed polyethylene is a metallocene polyethylene and/or at least one single-site catalyst catalysed isotactic polypropylene is a metallocene isotactic polypropylene.
- The at least one single-site catalyst catalysed isotactic polypropylene in the blend is an isotactic polypropylene-based composition comprising at least one single-site catalyst catalysed isotactic polypropylene and from 0.1 to 30 wt% of a syndiotactic polypropylene as based on the total weight of the isotactic polypropylene-based composition.
- The blend has a melt flow index of at most 100 g/10 min, preferably of at most 50 g/10 min, more preferably of at most 25 g/10 min and even more preferably of at most 20 g/10 min as measured according to ISO 1133 at 230 °C under a load of 2.16 kg.
- The blend further comprises from 0.1 wt% to 50 wt% of a filler as based on the total weight of the blend; preferably the filler comprises one or more reinforcement material selected from glass fibres and carbon nanotubes.
- The blend results of the blending of one metallocene isotactic polypropylene resin with one metallocene polyethylene resin.
- The isotactic polypropylene and the polyethylene are in co-continuous phases in the blend.
- The blend is devoid of compatibiliser, preferably selected from polypropylene grafted with maleic anhydride, polyethylene grafted with maleic anhydride, ethylene-vinyl acetate grafted with maleic anhydride, ethylene-octene copolymer (POE), ethylene-propylene rubber (EPR), ethylene-propylene diene rubber (EPDM) styrene-ethylene/butylene-styrene (SEBS) or any mixture thereof.
- The blend has a ductility index determined at 23 °C of at least 35%, preferably at least 40%, the ductility index being calculated according to the following equation (II):

$$\text{Ductility index (\%)} = \frac{E(break) - E(peak)}{E(break)} \, x100 \quad (II)$$

wherein E(break) is the falling weight average energy at break as determined at 23 °C and E(peak) is the falling weight average energy at peak as determined at 23 °C.

According to a second aspect, the invention encompasses the use of the inventive blends to produce articles, and the articles produced from the inventive blends. In an embodiment the articles are thermoformed articles or moulded articles selected from injection moulded articles, compression moulded articles, rotomoulded articles, injection blow moulded articles, and injection stretch blow moulded articles, preferably injection moulded articles. In an embodiment, the articles are selected from the group consisting of automobile parts, food or non-food packaging, retort packaging, housewares, caps, closures, media packaging, medical devices and pharmacopoeia packages. Preferably the articles are automobile parts. In an embodiment, the articles are not films and/or not fibres and/or not membranes.

According to a third aspect, the invention relates to a process for the production of a polyolefin blend comprising the steps of:

- providing at least one isotactic polypropylene produced in the presence of a single-site catalyst in one or more reactors;
- providing at least one polyethylene produced in the presence of a single-site catalyst in one or more reactors;
- blending said at least one isotactic polypropylene together with said at least one polyethylene to produce a blend comprising an isotactic polypropylene content ranging from 25 to 55 weight percent relative to the total weight of both the polyethylene and the polypropylene contained in the blend, wherein the at least one single-site catalyst polyethylene and the at least one single-site catalyst isotactic polypropylene are selected to fulfil the relationship:

$$MFI_{PP} = \alpha\ MI2_{PE}\ (I)$$

with $\alpha$ ranging from 2.0 to 9.0, $MI2_{PE}$ being the melt flow index of the polyethylene as measured according to ISO 1133 at 190 °C under a load of 2.16 kg and $MFI_{PP}$ being the melt flow index of the isotactic polypropylene as measured according to ISO 1133 at 230 °C under a load of 2.16 kg.

With preference, one or more of the following features can be used to further define the inventive process:

- The polyolefin blend produced according to the third aspect of the invention is the blend described in relation to the first aspect of the invention.
- The blending of said at least one said isotactic polypropylene together with said at least one said polyethylene is a physical blending.
- Said at least one isotactic polypropylene and/or said at least one polyethylene are produced in a loop reactor.
- The process has no step of blending a compatiliser selected from polypropylene grafted with maleic anhydride, polyethylene grafted with maleic anhydride, ethylene-vinyl acetate grafted with maleic anhydride, ethylene-octene copolymer (POE), ethylene-propylene rubber (EPR), ethylene-propylene diene rubber (EPDM) styrene-ethylene/butylene-styrene (SEBS) or any mixture thereof, together with said at least one isotactic polypropylene and/or said at least one polyethylene.

**Description of the figures**

- Figure 1 illustrates the evolution of the "Falling weight impact" at 23 °C as a function of the iPP content.
- Figure 2 illustrates the evolution of the "resilience Izod at 23 °C" as a function of the iPP content.
- Figure 3 illustrates the evolution of the "resilience Izod at -20 °C" as a function of the iPP content.
- Figure 4 illustrates the evolution of the elastic modulus at 1 rad/s as a function of the iPP content.
- Figure 5 illustrates the evolution of "tan $\delta$" at 1 rad/s as a function of the iPP content.

**Detailed description of the invention**

For the purpose of the invention, the terms "isotactic polypropylene" (iPP) and "isotactic propylene polymer" may be used synonymously. The term "single-site catalyst isotactic polypropylene" is used to denote a polypropylene produced with a single-site-based polymerisation catalyst. Amongst single-site catalysts, metallocene catalysts are preferred. In such case, the produced "metallocene isotactic polypropylene" will be labelled "miPP".

In a similar way, the terms "polyethylene" (PE) and "ethylene polymer" may be used synonymously. The term "single-site catalyst polyethylene" is used to denote a polyethylene produced with a single-site-based polymerisation catalyst. Amongst single-site catalysts, metallocene catalysts are preferred. In such case, the produced "metallocene polyethylene" will be labelled "mPE".

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The particular features, structures, characteristics or embodiments may be combined in any suitable manner, as would be apparent to a person skilled in the art from this disclosure, in one or more embodiments.

The terms "isotactic polypropylene", "isotactic polypropylene resin", "polyethylene" or "polyethylene resin" as used herein refer respectively to the polypropylene fluff or powder, or the polyethylene fluff or powder, that is extruded, and/or melted and/or pelletized and can be produced through compounding and homogenizing of the isotactic polypropylene resins or polyethylene resins as taught herein, for instance, with mixing and/or extruder equipment. The terms "fluff" or "powder" as used herein refer to the isotactic polypropylene material or to the polyethylene material with the hard catalyst particle at the core of each grain and is defined as the polymer material after it exits the polymerisation reactor (or final polymerisation reactor in the case of multiple reactors connected in series).

The invention provides a blend of at least one single-site catalyst polyethylene and at least one single-site catalyst isotactic polypropylene wherein the blend:

- comprises an isotactic polypropylene content ranging from 25 to 55 weight percent relative to the total weight of both the polyethylene and the polypropylene contained in the blend, and
- the at least one single-site catalyst polyethylene and the at least one single-site catalyst isotactic polypropylene are selected to fulfil the relationship:

$$MFI_{PP} = \alpha\ MI2_{PE}\ (I)$$

with $\alpha$ ranging from 2.0 to 9.0, $MI2_{PE}$ being the melt flow index of the polyethylene as measured according to ISO 1133 at 190 °C under a load of 2.16 kg and $MFI_{PP}$ being the melt flow index of the isotactic polypropylene as measured according to ISO 1133 at 230 °C under a load of 2.16 kg.

If $\alpha$ is higher than 9.0 or lower than 2.0, the blend may not show the targeted improvement in ductility and in the impact properties at 23 °C and -20 °C.

The combination of blend proportions of the single-site catalyst isotactic polypropylene and single-site catalyst polyethylene with the selected melt flow index ratio $\alpha$, provides an unexpected improvement of the impact properties while maintaining or slightly improving other targeted properties.

Isotactic polypropylene

The isotactic polypropylene (iPP) of the invention is characterised by an isotacticity for which the content of mmmm pentads is a measure. Preferably the polypropylene has content of mmmm pentads ranging from 70 % to 99 % as determined by $^{13}$C-NMR analysis, preferably from 80 % to 98 %, more preferably from 90 % to 97 %, and even more preferably of at least 94 %. The isotacticity may be determined by $^{13}$C-NMR analysis as described in the test methods.

The isotactic polypropylene contemplated in the inventive blend is produced by single-site catalyst, preferably metallocene catalyst.

Preferably, the isotactic polypropylene is characterized by a percentage of 2,1-insertions, relative to the total number of propylene molecules in the polymer chain, of at least 0.1 mol %, preferably at least 0.2 mol %.

Preferably, the isotactic polypropylene is further characterized by a percentage of 2,1-insertions, relative to the total number of propylene molecules in the polymer chain, of at most 1.5 mol %, more preferably of at most 1.3 mol %. The percentage of 2,1-insertions may be determined as indicated in the test methods.

The isotactic polypropylene has a melt flow index ($MFI_{PP}$) ranging from 0.1 to 1000 g/10 min, preferably 0.1 to 500 g/10 min as measured according to ISO 1133 at 230 °C under a load of 2.16 kg. Preferably, the isotactic polypropylene has a melt flow index ($MFI_{PP}$) of at most 100 g/10 min as measured according to ISO 1133 at 230 °C under a load of 2.16 kg.

More preferably, the miPP has a melt flow index ($MFI_{PP}$) of at least 10 g/10 min, preferably of at least 12 g/10 min, and more preferably of at least 14 g/10 min as measured according to ISO 1133 at 230 °C under a load of 2.16 kg. The value of MFI of the polypropylene is obtained without degradation treatment.

Preferably, the isotactic polypropylene has a molecular weight distribution (MWD), defined as Mw/Mn, i.e. the ratio of weight average molecular weight (Mw) over number average molecular weight (Mn), of at most 10, preferably of at most 5, more preferably of at most 4 and even more preferably of at most 3.5.

Preferably, the isotactic polypropylene has a molecular weight distribution (MWD), defined as Mw/Mn, i.e. the ratio of weight average molecular weight (Mw) over number average molecular weight (Mn), of at least 2.0, preferably of at least 2.1.

The molecular weight distribution (MWD) of the isotactic propylene polymer may be monomodal or multimodal, for example bimodal. A multimodal molecular weight distribution is obtained by combining at least two isotactic propylene polymers having different melt flow indices. The isotactic polypropylene may be monomodal or multimodal. In an embodiment of the invention, the isotactic propylene polymer has a monomodal molecular weight distribution.

The isotactic polypropylene has a density at room temperature ranging from 0.850 $g/cm^3$ to 0.950 $g/cm^3$. Preferably the isotactic polypropylene has a density at room temperature ranging from 0.870 $g/cm^3$ to 0.920 $g/cm^3$ as determined according to ISO 1183 at a temperature of 23 °C.

Preferably, the isotactic polypropylene has a melting temperature of at most 155 °C, preferably of at most 153 °C. The melting temperature is determined according to ISO 3146.

The isotactic polypropylene is a homopolymer, a copolymer of propylene and at least one comonomer, or a mixture thereof. Suitable comonomers can be selected from the group consisting of ethylene and aliphatic $C_4$-$C_{20}$ alpha-olefins. Examples of suitable aliphatic $C_4$-$C_{20}$ alpha-olefins include 1-butene, 1-pentene, 4-methyl-1-pentene, 1-hexene, 1-octene, 1-decene, 1-dodecene, 1-tetradecene, 1-hexadecene, 1-octadecene and 1-eicosene. Preferably, the comonomer is ethylene or 1-hexene. More preferably, the comonomer is ethylene.

In a preferred embodiment of the invention, the isotactic polypropylene is a homopolymer of propylene. A homopolymer according to this invention has less than 0.1 wt%, preferably less than 0.05 wt% and more preferably less than 0.005 wt%, of alpha-olefins other than propylene in the polymer. Most preferred, no other alpha-olefins are detectable.

In an embodiment, the isotactic propylene polymer is an isotactic propylene copolymer. The isotactic propylene copolymer can be a random copolymer, a heterophasic copolymer, or a mixture thereof.

The random isotactic propylene copolymer comprises at least 0.1 wt% of one or more comonomers, preferably at least 1 wt%. The random isotactic propylene copolymer comprises up to 10 wt% of one or more comonomers and most preferably up to 6 wt%. Preferably, the random copolymer is a copolymer of isotactic propylene and ethylene.

The heterophasic copolymer of isotactic propylene comprises a dispersed phase, generally constituted by an elastomeric ethylene-propylene copolymer (for example EPR), distributed inside a semi-crystalline isotactic polypropylene matrix being a homopolymer of isotactic propylene or a random isotactic propylene copolymer.

With preference, the isotactic polypropylene is a homopolymer, a random copolymer of isotactic propylene and at least one comonomer or a mixture thereof.

Preferably, the isotactic polypropylene is not and/or does not comprise a terpolymer.

The invention also encompasses isotactic polypropylene compositions comprising the isotactic polypropylene as defined above.

Preferably, the polymerisation of isotactic propylene and one or more optional comonomers is performed in the presence of one or more metallocene-based catalytic systems comprising one or more metallocene components, a support and an activating agent.

Polyethylene

The polyethylene contemplated in the invention is made using single-site catalysts, preferably metallocene catalysts.

The polyethylene has a melt flow index (MI2) as from 0.001 to 1000 g/10 min. Preferably, the polyethylene has a melt flow index (MI2) of at most 500 g/10 min, preferably at most 100 g/10 min. Preferably, the polyethylene has a MI2 of at least 0.5 g/10 min, more preferably of at least 1 g/10 min, even more preferably of at least 1.2 g/10 min and most preferably of at least 1.5 g/10 min. The MI2 of the polyethylene is determined according to ISO 1133 at 190 °C under a load of 2.16 kg.

Preferably, the polyethylene has a molecular weight distribution (MWD), defined as Mw/Mn, i.e. the ratio of weight average molecular weight (Mw) over number average molecular weight (Mn) of at most 10, preferably of at most 5, more preferably of at most 4, and even more preferably of at most 3.5.

Preferably, the polyethylene has a molecular weight distribution (MWD), defined as Mw/Mn, i.e. the ratio of weight average molecular weight (Mw) over number average molecular weight (Mn) of at least 2.0, preferably of at least 2.1.

In an embodiment, the polyethylene has a monomodal molecular weight distribution. In another embodiment, the polyethylene has a multimodal molecular weight distribution, preferably a bimodal molecular weight distribution. The polyethylene may be monomodal or multimodal.

The density of the polyethylene is ranging from 0.820 $g/cm^3$ to 0.980 $g/cm^3$. Preferably, the polyethylene has a density of at most 0.960 $g/cm^3$. Preferably, the polyethylene has a density of at least 0.850 $g/cm^3$, more preferably of at least 0.900 $g/cm^3$, even more preferably of at least 0.910 $g/cm^3$ and most preferably of at least 0.915 $g/cm^3$. The density is determined according to ISO 1183 at a temperature of 23 °C.

The polyethylene is selected from low density polyethylene (LDPE), medium density polyethylene (MDPE), high density polyethylene (HDPE), and mixtures thereof.

The polyethylene is a homopolymer, a copolymer of ethylene and at least one comonomer, or a mixture thereof. Suitable comonomers comprise but are not limited to aliphatic $C_3$-$C_{20}$ alpha-olefins. Examples of suitable aliphatic $C_3$-$C_{20}$ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The term "copolymer" refers to a polymer which is made by linking ethylene and at least one comonomer in the same polymer chain. The term homopolymer refers to a polymer which is made in the absence of comonomer or with less than 0.1 wt%, more preferably less than 0.05 wt%, most preferably less than 0.005 wt% of comonomer.

In case the polyethylene is a copolymer, it comprises at least 0.1 wt% of comonomer, preferably at least 1 wt%. The ethylene copolymer comprises up to 10 wt% of comonomer and most preferably up to 6 wt%. In an embodiment of the invention, the comonomer is 1-hexene.

The invention also encompasses polyethylene compositions comprising the polyethylene as defined above.

The polymerisation of ethylene and one or more optional comonomers is performed in the presence of one or more metallocene-based catalytic systems comprising one or more metallocene component(s), a support and an activating agent.

Production Metallocene-based catalytic systems

The isotactic polypropylene and/or the polyethylene resins are preferably prepared in a reactor, either in gas phase, in bulk, in solution or in slurry conditions. Preferably, said isotactic polypropylene is prepared under bulk conditions and said polyethylene is prepared under slurry conditions. More preferably said isotactic polypropylene and/or polyethylene are produced in a loop reactor that preferably comprises interconnected pipes defining a reactor path and wherein liquid propylene is injected for isotactic polypropylene, or a slurry is preferably pumped through said loop reactor for polyethylene. Preferably, the isotactic polypropylene and/or polyethylene resin are each produced in a double loop reactor, comprising two loop reactors connected in series. Preferably, each of the isotactic polypropylene and the polyethylene resin is produced separately in a single or a double loop reactor.

As used herein the term "polymerisation slurry" or "polymer slurry" or "slurry" means substantially a multi-phase composition including at least polymer solids and a liquid phase, the liquid being the continuous phase. The solids include catalyst and a polymerised olefin, such as isotactic polypropylene or polyethylene. The liquid includes an inert diluent such as isobutane, dissolved monomer(s) such as propylene or ethylene, optional comonomer(s), molecular weight control agents such as hydrogen, antistatic agents, antifouling agents, scavengers and other process additives.

The single-site catalyst-based catalytic systems are known to the person skilled in the art. Amongst these catalysts, metallocene catalysts are preferred. The metallocene catalysts are compounds of Group IV transition metals of the Periodic Table such as titanium, zirconium, hafnium, etc., and have a coordinated structure with a metal compound and a ligand composed of one or two groups of cyclopentadienyl, indeny, fluorenyl or their derivatives. The use of metallocene catalysts in the polymerisation of olefins has various advantages. Metallocene catalysts have high activities and are capable of preparing polymers with enhanced physical properties. Metallocenes comprise a single metal site, which allows for more control of branching and molecular weight distribution of the polymer.,

The metallocene component used to prepare the isotactic polypropylenes and the polyethylenes can be any bridged metallocene known in the art. Supporting method and polymerisation processes are described in many patents, for example in WO2012/001160A2 which is enclosed by reference in its entirety. Preferably it is a metallocene represented by the following general formula:

$$\mu\text{-}R^1(C_5R^2R^3R^4R^5)(C_5R^6R^7R^8R^9)MX^1X^2 \qquad \text{(III)}$$

wherein

- the bridge $R^1$ is $\text{-}(CR^{10}R^{11})_p\text{-}$ or $\text{-}(SiR^{10}R^{11})_p\text{-}$ with p = 1 or 2, preferably it is $\text{-}(SiR^{10}R^{11})\text{-}$;
- M is a metal selected from Ti, Zr and Hf, preferably it is Zr;
- $X^1$ and $X^2$ are independently selected from the group consisting of halogen, hydrogen, $C_1$-$C_{10}$ alkyl, $C_6$-$C_{15}$ aryl, alkylaryl with $C_1$-$C_{10}$ alkyl and $C_6$-$C_{15}$ aryl;
- $R^2$, $R^3$, $R^4$, $R^5$, $R^6$, $R^7$, $R^8$, $R^9$, $R^{10}$ and $R^{11}$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighboring R may form a cyclic saturated or non-saturated $C_4$-$C_{10}$ ring; each $R^2$, $R^3$, $R^4$, $R^5$, $R^6$, $R^7$, $R^8$, $R^9$, $R^{10}$ and $R^{11}$ may in turn be substituted in the same way.

The preferred metallocene components are represented by the general formula (III), wherein

- the bridge $R^1$ is $SiR^{10}R^{11}$;
- M is Zr;
- $X^1$ and $X^2$ are independently selected from the group consisting of halogen, hydrogen, and $C_1$-$C_{10}$ alkyl; and
- $(C_5R^2R^3R^4R^5)$ and $(C_5R^6R^7R^8R^9)$ are indenyl of the general formula $C_9R^{12}R^{13}R^{14}R^{15}R^{16}R^{17}R^{18}R^{19}$, wherein $R^{12}$, $R^{13}$, $R^{14}$, $R^{15}$, $R^{16}$, $R^{17}$, and $R^{18}$ are each independently selected from the group consisting of hydrogen, $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring R may form a cyclic saturated or non-saturated $C_4$-$C_{10}$ ring;
- $R^{10}$ and $R^{11}$ are each independently selected from the group consisting of $C_1$-$C_{10}$ alkyl, $C_5$-$C_7$ cycloalkyl, and $C_6$-$C_{15}$ aryl, or $R^{10}$ and $R^{11}$ may form a cyclic saturated or non-saturated $C_4$-$C_{10}$ ring; and
- each $R^{10}$, $R^{11}$, $R^{12}$, $R^{13}$ $R^{14}$ $R^{15}$ $R^{16}$ $R^{17}$ and $R^{18}$ may in turn be substituted in the same way.

Particularly suitable metallocenes are those having $C_2$-symmetry or several characterized by a $C_1$-symmetry.

Examples of particularly suitable metallocenes are:

- dimethylsilanediyl-bis(cyclopentadienyl)zirconium dichloride,
- dimethylsilanediyl-bis(2-methyl-cyclopentadienyl)zirconium dichloride,
- dimethylsilanediyl-bis(3-methyl-cyclopentadienyl)zirconium dichloride,
- dimethylsilanediyl-bis(3-tert-butyl-cyclopentadienyl)zirconium dichloride,
- dimethylsilanediyl-bis(3-tert-butyl-5-methyl-cyclopentadienyl)zirconium dichloride,
- dimethylsilanediyl-bis(2,4-dimethyl-cyclopentadienyl)zirconium dichloride,
- dimethylsilanediyl-bis(indenyl)zirconium dichloride,
- dimethylsilanediyl-bis(2-methyl-indenyl)zirconium dichloride,
- dimethylsilanediyl-bis(3-methyl-indenyl)zirconium dichloride,
- dimethylsilanediyl-bis(3-tert-butyl-indenyl)zirconium dichloride,
- dimethylsilanediyl-bis(4,7-dimethyl-indenyl)zirconium dichloride,
- dimethylsilanediyl-bis(tetrahydroindenyl)zirconium dichloride,
- dimethylsilanediyl-bis(benzindenyl)zirconium dichloride,
- dimethylsilanediyl-bis(3,3'-2-methyl-benzindenyl)zirconium dichloride,
- dimethylsilanediyl-bis(4-phenyl-indenyl)zirconium dichloride,
- ethylene-bis(indenyl)zirconium dichloride,
- ethylene-bis(tetrahydroindenyl)zirconium dichloride,
- isopropylidene-(3-tert-butyl-5-methyl-cyclopentadienyl)(fluorenyl) zirconium dichloride.

The metallocene component may be supported according to any method known in the art. In the event it is supported, the support used in the present invention can be any organic or inorganic solid, particularly a porous support such as silica, talc, inorganic oxides, and resinous support material such as polyolefin. Preferably, the support material is an inorganic oxide in its finely divided form.

The polymerisation of propylene and one or more optional comonomers in the presence of a metallocene-based catalytic system can be carried out according to known techniques in one or more polymerisation reactors. The metallocene isotactic polypropylene is preferably produced by polymerisation in liquid propylene at temperatures in the range from 20 °C to 100 °C. Preferably, temperatures are in the range from 60 °C to 80 °C. The pressure can be atmospheric or higher. It is preferably between 25 and 50 bar. The molecular weight of the polymer chains, and in consequence the melt flow of the metallocene isotactic polypropylene, is mainly regulated by the addition of hydrogen to the polymerisation medium.

Preferably, the metallocene isotactic polypropylene is recovered from the one or more polymerisation reactors without post-polymerisation treatment to reduce its molecular weight and/or narrow its molecular weight distribution, such as can be done by thermal or chemical degradation. An example of chemical degradation is visbreaking, wherein the isotactic polypropylene is reacted for example with an organic peroxide at elevated temperatures, for example in an extruder or pelletising equipment.

The polymerisation of ethylene and one or more optional comonomers in the presence of a metallocene-based catalyst system can be carried out according to known techniques in one or more polymerisation reactors. The metallocene polyethylene of the present invention is preferably produced by polymerisation in an "isobutane - ethylene - supported catalyst" slurry at temperatures in the range from 20 °C to 110 °C, preferably in the range from 60 °C to 110 °C. The pressure can be atmospheric or higher. It is preferably between 25 and 50 bar. The molecular weight of the polymer chains, and in consequence the melt flow of the metallocene polyethylene, is mainly regulated by the addition of hydrogen in the polymerisation medium. The density of the polymer chains is regulated by the addition of one or more comonomers in the polymerisation medium.

Blends

The present invention relates to the blending, preferably the physical blending, of at least two different polyolefin resins produced with single-site catalysts, preferably metallocene catalysts. Both resins are produced separately, preferably in separate reactors.

Surprisingly, the present invention found that single-site catalyst isotactic polypropylenes and single-site catalyst polyethylenes can be blended in specific proportions to form compositions/blends having an improved impact resistance and ductility without requiring the addition of any compatibiliser.

The invention provides blends wherein the isotactic polypropylene content is combined with a relationship between the viscosity of the blended isotactic polypropylene and polyethylene, said relationship being expressed by the value $\alpha$. The isotactic polypropylene weight content is defined in relation to the total weight of both the polyethylene and the isotactic polypropylene contained in the blend.

The invention provides blends comprising an isotactic polypropylene content ranging from 25 to 55 weight percent relative to the total weight of both the polyethylene and the polypropylene contained in the blend, and wherein the at least one single-site catalyst polyethylene and the at least one single-site catalyst isotactic polypropylene are selected to fulfil the relationship:

$$MFI_{PP} = \alpha\ MI2_{PE}\ (I)$$

with $\alpha$ ranging from 2.0 to 9.0, $MI2_{PE}$ being the melt flow index of the polyethylene as measured according to ISO 1133 at 190 °C under a load of 2.16 kg and $MFI_{PP}$ being the melt flow index of the isotactic polypropylene as measured according to ISO 1133 at 230 °C under a load of 2.16 kg.

If $\alpha$ is higher than 9.0 or lower than 2.0, the blend may not show the targeted improvement in ductility and in the impact properties. In an embodiment, $\alpha$ is ranging from 4.0 to 8.0.

In an embodiment, $\alpha$ is at most 8.5, preferably at most 8.0, more preferably at most 7.5 and/or $\alpha$ is at least 2.5, preferably at least 3.0, more preferably at least 3.5, and even more preferably at least 4.0.

Surprisingly such blends show an improved falling weight properties at 23 °C compared to blends with polyethylene produced with a catalyst that is not a single-site catalyst. Another surprise is the failure mechanism. Indeed only ductile breaks at 23 °C are observed for the inventive blends, whereas comparative blends with polyethylene not produced with a single-site catalyst show a mixture of ductile and fragile breaks or only fragile breaks.

In an embodiment, the blends of the present invention comprise at most 53 wt% of polypropylene relative to the total weight of both the polyethylene and the isotactic polypropylene contained in the blend, preferably at most 50 wt%, more preferably at most 48 wt% and even more preferably at most 45 wt%.

In an embodiment, the blends of the present invention comprise at least 30 wt% of polypropylene relative to the total weight of both polyethylene and isotactic polypropylene contained in the blend, preferably at least 35 wt%, preferably at least 40 wt%.

Preferably, the inventive blends show a ductility index of at least 35%, preferably of at least 40%. The ductility index is determined at 23 °C and according to the following equation:

$$\text{Ductility index (\%)} = \frac{E(break) - E(peak)}{E(break)}\ x100\ \ (II)$$

wherein E(break) is the falling weight average energy at break (in Joule) and E(peak) is the falling weight average energy at peak (in Joule). This ductility index is calculated using the falling weight impact experimental results.

In an embodiment, the single-site catalyst isotactic polypropylene and single-site catalyst polyethylene are produced in a sequence of reactors, one or more reactors for the production of isotactic polypropylene and/or one or more reactors for the production of polyethylene. Preferably the single-site catalyst isotactic polypropylene resin and the single-site catalyst polyethylene resin are physically blended into a device for melting and blending said resins selected from a mixer, an extruder or combination thereof. For example, said device is an extruder and/or a mixer. Preferably the device is an extruder. A preferred extruder is a corotating twin screw. A preferred mixer is a counter-rotating twin screw.

The blends according to the invention result of the blending of:

- one single-site catalyst isotactic polypropylene resin with one single-site catalyst polyethylene resin; or
- one single-site catalyst isotactic polypropylene resin with two or more single-site catalyst polyethylene resins of different melt index and/or of different density; or

- two or more single-site catalyst isotactic polypropylene resins of different melt index and/or of different comonomer content with one single-site catalyst polyethylene resin; or
- two or more single-site catalyst isotactic polypropylene resins of different melt index and/or comonomer content with two or more single-site catalyst polyethylene resins of different melt index and/or density.

When the blends contain two or more single-site catalyst isotactic polypropylene resins of different melt index, the $MFI_{PP}$ to be considered is the MFI measured on the mixture of said two or more single-site catalyst isotactic polypropylene resins. Thus, in order to determine the isotactic polypropylene content in the blend in accordance with the invention, the person skilled in the art can mix the two or more isotactic polypropylene resins in a first step and then determine the $MFI_{PP}$ of the resulting mixture according to ISO 1133 at 230 °C under a load of 2.16 kg.

In a similar way, when the blends contain two or more single-site catalyst polyethylene resins of different melt index, the $MI2_{PE}$ to be considered is the MI2 measured on the mixture of said two or more single-site catalyst polyethylene resins. Thus, in order to determine the isotactic polypropylene content in the blend in accordance with the invention, the person skilled in the art can mix the two or more polyethylene resins in a first step and then determine the $MI2_{PE}$ of the resulting mixture according to ISO 1133 at 190 °C under a load of 2.16 kg.

In an embodiment, the blends according to the invention also contain non-single-site catalysed polymer such as non-single-site catalysed isotactic polypropylene and/or non-single-site catalysed polyethylene.

When non-single-site catalysed isotactic polypropylene is present in the blend, for example Ziegler-Natta catalysed isotactic polypropylene, the isotactic polypropylene content in weight percent relative to the total weight of both the polyethylene and the isotactic polypropylene contained in the blend is the sum of the content of both single-site catalysed isotactic polypropylene and non-single-site catalysed isotactic polypropylene.

When non-single-site catalysed isotactic polypropylene is present in the blend, its content in weight percent is at most 10 wt%, preferably at most 5 wt%, more preferably at most 2 wt% relative to the total weight of both the polyethylene and the isotactic polypropylene contained in the blend.

In a preferred embodiment, all the isotactic polypropylene contained in the blend is single-site catalysed isotactic polypropylene. Thus the blend is devoid of isotactic polypropylene produced by a catalyst other than single-site catalysts; preferably the blend is devoid of isotactic polypropylene produced by a catalyst other than metallocene catalysts.

When non-single-site catalysed polyethylene is present in the blend - for example Ziegler-Natta catalysed polyethylene - its content in weight percent is at most 10 wt%, preferably at most 5 wt%, more preferably at most 2 wt% relative to the total weight of both the polyethylene and the isotactic polypropylene contained in the blend.

In a preferred embodiment, all the polyethylene contained in the blend is single-site catalysed polyethylene. Thus the blend is devoid of polyethylene produced by a catalyst other than single-site catalysts; preferably the blend is devoid of polyethylene produced by a catalyst other than metallocene catalysts.

In an embodiment, the polyethylene and/or the isotactic polypropylene have a bimodal molecular weight distribution.

In a preferred embodiment, the polyethylene and/or the isotactic polypropylene have a monomodal molecular weight distribution.

In an embodiment, both the polyethylene and the isotactic polypropylene have a molecular weight distribution Mw/Mn of at most 5, preferably of at most 4, more preferably of at most 3.5; and/or of at least 2.0, preferably of at least 2.1.

With preference, the blends according to the invention result of the blending of one metallocene isotactic polypropylene resin with one metallocene polyethylene resin.

In an embodiment, the at least one single-site catalyst catalysed isotactic polypropylene in the blend is an isotactic polypropylene-based composition comprising at least one single-site catalyst catalysed isotactic polypropylene and from 0.1 to 30 wt% of a syndiotactic polypropylene as based on the total weight of the isotactic polypropylene-based composition. In such a case, the metallocene component to prepare the syndiotactic polypropylene can be the ones described in US6184326, with supporting techniques such as in WO2012/001160.

The present invention encompasses steps for preparing the isotactic polypropylene resin and/or the polyethylene resin. The resins are preferably prepared, in one or more reactor, either in gas phase, in bulk or in slurry condition. Polyethylene is preferably produced in slurry or gas phase process and isotactic polypropylene is preferably produced in bulk process. For slurry and bulk processes, the reactors used can be single loop reactors or double loop reactors.

Without being bound by a theory, it is believed that the content of single-site catalyst isotactic polypropylene relative to the total weight of both the polyethylene and the isotactic polypropylene contained in the blend together with the ratio of melt index between the components of the inventive blends, allows obtaining co-continuous blends The absence of imposed stress transfer across an interface in a co-continuous morphology is presented in the literature as a way to obtain good mechanical properties. Co-continuous blends are known to improve the impact strength and the tensile strength of the resulting product compared to blends with dispersed morphology. However, the existence of a co-continuous morphology is not enough to explain the interesting mechanical properties measured in the inventive blends. Indeed, comparative blends with polyethylene not produced with a single-site catalyst may also show said co-continuous morphology but not said improvements in low temperature mechanical properties.

In an embodiment, the isotactic polypropylene and the polyethylene are in co-continuous phases in the inventive blends.

Advantageously, the blends of the invention are devoid of compatibiliser such as modified (functionalized) polymers (e.g. polypropylene grafted with maleic anhydride or polyethylene grafted with maleic anhydride), ethylene-vinyl acetate grafted with maleic acid, ethylene-octene copolymer (POE), ethylene-propylene rubber (EPR), ethylene-propylene diene rubber (EPDM) styrene-ethylene/butylene-styrene (SEBS), low molecular weight compound having reactive polar groups, or any mixture thereof.

Thus, in an embodiment, the process of the invention has no step of blending a compatiliser selected from polypropylene grafted with maleic anhydride, polyethylene grafted with maleic anhydride, ethylene-vinyl acetate grafted with maleic anhydride, ethylene-octene copolymer (POE), ethylene-propylene rubber (EPR), ethylene-propylene diene rubber (EPDM) styrene-ethylene/butylene-styrene (SEBS) or any mixture thereof, together with said at least one isotactic polypropylene and/or said at least one polyethylene.

However, in an embodiment, the isotactic polypropylene resin and/or the polyethylene resin and/or the inventive blend may also comprise additives, such as by way of example, antioxidants, light stabilizers, acid scavengers, lubricants, antistatic additives, nucleating agents and colourants. An overview of such additives may be found in Plastics Additives Handbook, ed. H. Zweifel, 5th edition, 2001, Hanser Publishers, Annex 3, pages 181-212.

Optionally, the blend further comprises from 0.1 wt% to 50 wt% relative to the total weight of the blend, of a filler.

Preferred filler is one or more selected from reinforcement material, pigments, metallic flakes, glass flakes, milled glass, glass sphere and mineral filler such as talc, wollastonite, calcium carbonate, mica, silicates, kaolin, barium sulphate, metal oxides and hydroxides.

Preferred reinforcement material comprises one or more fibres selected from organic or inorganic such as fibres made of glass, metal, ceramic, graphite, carbon nanotubes, bamboo and organic polymers such as polyesters and nylons, e.g. aramids, in filamentary form, all of which are commercially available. If a reinforcement material is added, the reinforcement material preferably comprises glass fibres or carbon nanotubes.

Preferred pigments include organic and inorganic substances and are one or more selected from carbon black, $TiO_2$, ZnO, chromium oxides, iron oxides, azo pigments, phthalocyanines, quinacridones, perylene pigments, naphthalene derivates, isoindo lines, anthraquinone pigments.

The blends of the present invention may be transformed into articles by a transformation method selected from the group comprising thermoforming, injection moulding, compression moulding, rotomoulding, injection blow moulding and injection stretch blow moulding. Preferably the method of transformation is injection moulding. The articles of the present invention are selected from the group consisting of automobile parts, food or non-food packaging, retort packaging, housewares, caps, closures, media packaging, medical devices and pharmacopoeia packages. They can also contain one or more living hinges.

The blends according to the invention can be used for any article that is produced by injection moulding. The injection moulding process comprises the steps of:

(a) blending the single-site catalyst isotactic polypropylene and single-site catalyst polyethylene in defined proportions to produce a polyolefin blend according to the invention;
(b) melting said polyolefin blend, and
(c) injecting the molten polyolefin blend from step (b) into an injection mould to form an injection-moulded article.

In step (a), the blend is obtained via a polymerisation of the two polyolefins in a sequence of reactors, via a dry blend or via a preliminary pelletisation of the blend.

The injection moulding is performed using methods and equipment well known to the person skilled in the art.

The present invention also relates to the use of the blends according to the present invention for manufacturing moulded articles and in particular for the manufacturing of injection moulded articles. The details and embodiments described above in connection with the inventive blends also apply to the use according to the present invention.

In particular, examples of articles produced from the inventive blends may be cups, tubs, pails, buckets, toys, household appliances, containers, caps, closures, and crates, to only name a few.

The inventive blends are particularly suited for automobile parts. Thus, said blends can be used to produce automobile parts such as interior parts like door panels; instrument panels; consoles; A, B and C pillar trims; seat protectors; air ducts; door lists; door trims; air-bag containers and others. The automobile parts also include exterior parts like body panels, bumpers, rocker panels, door lists, side sills, cowl covers and others.

With preference, the articles produced from the inventive blends are not films and/or not fibres and/or not membranes.

**Test methods**

The melt flow index ($MI2_{PE}$) of the polyethylene or polyethylene composition is determined according to ISO 1133 at 190 °C under a load of 2.16 kg.

The melt flow index ($MFI_{PP}$) of the polypropylene or polypropylene composition is determined according to ISO 1133 at 230 °C under a load of 2.16 kg.

Molecular weights are determined by Size Exclusion Chromatography (SEC) at high temperature (145 °C). A 10 mg polypropylene sample is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Detector: IR5 Infrared detector (2800-3000 cm$^{-1}$);
- Calibration: Narrow standards of polystyrene (commercially available);
- Calculation for polypropylene: Based on Mark-Houwink relation ($\log_{10}(M_{PP}) = \log_{10}(M_{PS}) - 0{,}25323$); cut off on the low molecular weight end at $M_{PP} = 1000$;
- Calculation for polyethylene: Based on Mark-Houwink relation ($\log_{10}(M_{PE}) = 0.965909 \times \log_{10}(M_{PS}) - 0{,}28264$); cut off on the low molecular weight end at $M_{PE} = 1000$.

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

The $^{13}$C-NMR analysis is performed using a 400 MHz or 500 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data is acquired using proton decoupling, 2000 to 4000 scans per spectrum with 10 mm at room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenise the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg to 600 mg of polymer are dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The isotacticity is determined by $^{13}$C-NMR analysis on the total polymer. In the spectral region of the methyl groups the signals corresponding to the pentads mmmm, mmmr, mmrr and mrrm are assigned using published data, for example A. Razavi, Macromol. Symp., vol. 89, pages 345-367. Only the pentads mmmm, mmmr, mmrr and mrrm are taken into consideration due to the weak intensity of the signals corresponding to the remaining pentads. For the signal relating to the mmrr pentad a correction is performed for its overlap with a methyl signal related to 2,1-insertions. The percentage of mmmm pentads is then calculated according to

$$\% \text{ mmmm} = AREA_{mmmm} / (AREA_{mmmm} + AREA_{mmmr} + AREA_{mmrr} + AREA_{mrrm}) \bullet 100$$

The comonomer content of a polypropylene or of a polyethylene is determined by $^{13}$C-NMR analysis of pellets according to the method described by G.J. Ray et al. in Macromolecules, vol. 10, n° 4, 1977, p. 773-778.

Percentage of 2.1-insertions for a propylene homopolymer: The signals corresponding to the 2,1-insertions are identified with the aid of published data, for example H.N. Cheng, J. Ewen, Makromol. Chem., vol. 190, 1989, p. 1931-1940. A first area, AREA1, is defined as the average area of the signals corresponding to 2,1-insertions. A second area, AREA2, is defined as the average area of the signals corresponding to 1,2-insertions. The assignment of the signals relating to the 1,2-insertions is well known to the skilled person and need not be explained further. The percentage of 2,1-insertions is calculated according to:

$$\text{2,1-insertions (in \%)} = AREA1 / (AREA1 + AREA2) \; x \; 100$$

with the percentage in 2,1-insertions being given as the molar percentage of 2,1-inserted propylene with respect to total propylene.

Percentage of 2,1-insertions for a random copolymer of propylene and ethylene is determined by two contributions:

    A. the percentage of 2,1-insertions as defined above for the propylene homopolymer, and

    B. the percentage of 2,1-insertions, wherein the 2,1-inserted propylene neighbours and ethylene,

thus the total percentage of 2,1-insertions corresponds to the sum of these two contributions. The assignments of the signal for case (B) can be done either by using reference spectra or by referring to the published literature.

Melting temperatures $T_m$ were determined according to ISO 3146 on a DSC Q2000 instrument by TA Instruments. To erase the thermal history the samples are first heated to 200 °C and kept at 200 °C for a period of 3 minutes. The reported melting temperatures $T_{melt}$ are then determined with heating and cooling rates of 20 °C/min.

The density is determined according to ISO 1183 at a temperature of 23 °C.

Flexural modulus and Notched Izod impact properties are measured on samples of type A1 (ISO 20753) prepared according to standard ISO 1873-2.

Flexural modulus was measured at 23 °C according to ISO 178.

Notched Izod impact strength was measured at 23 °C and -20 °C according to ISO 180.

Falling weight impact properties are measured on type D12 (ISO 20753) - square [(60 $\pm$ 2) mm - thickness: (2.0 $\pm$ 0.1) mm] - prepared according to standard ISO 1873-2.

Falling weight was measured at 23 °C and -20 °C according to ISO 6603-2 standard. Samples are used with an annular support (40 $\pm$ 2) mm diameter. Tests are performed on an Instron (formerly Ceast) Fractovis equipment (reference 7526) with strikers and piezoelectrical load transducer. Data are collected thanks to an interface type DAS 16000 and treated via software.

At least 5 samples are analyzed for each polymer (in agreement with ISO 6603-2 norm).

Scanning Electron Microscope (SEM) analysis was performed. This analysis is described in various documents like "Preparation des echantillons pour MEB et microanalyse" - Philippe Jonnard (GNMEBA) - EDP Sciences or "Polymer Microscopy" - Linda C. Sawyer and David T. Grubb - Ed. Chaoman and Hall.

The used method corresponds to a treatment called "coloration" or "selective labelling". The objective is an increase of the contrast between various components during observation. This is performed thanks to heavy metal fixation on specific sample phases. In Scanning Electron Microscopy, such method brings a stronger contrast, especially considering retrodiffused electrons. Main used heavy metals are osmium-based ($OsO_4$) or ruthenium-based ($RuO_4$). Heavy metal treatment could be performed in liquid phase or in gas phase. For polyethylene, $RuO_4$ was used. Such treatment amplifies the contrast between amorphous and crystalline phases. $RuO_4$ treatment is less selective than $OsO_4$ treatment. A kinetics study is thus required in order to keep a selective labelling (all phases will be labelled after a too long $RuO_4$ treatment).

To highlight the polyethylene dispersion in isotactic polypropylene, observations are performed on a sample cut by cryo-microtone. The prepared surface is then labelled with $RuO_4$, which will be fixed on polyethylene phase. As soon as labelling is finished, the polyethylene phase will clearly appear when considering retrodiffused electrons and the phase dispersion will be clearly identified.

The following non-limiting examples illustrate the invention.

**Examples:**

Table 1: polymers characterization

| | Unit | miPP1 | mPE1 | mPE2 | PE3 |
|---|---|---|---|---|---|
| MFI (230 °C, 2.16 kg) | g / 10 min | 14.70 | - | - | - |
| MFI (190 °C, 2.16 kg) | g / 10 min | - | 2.0 | 3.5 | 2.3 |
| Density | g / cm$^3$ | 0.905 | 0.918 | 0.918 | 0.923 |
| Notched Izod at 23 °C | kJ/m$^2$ | 2.78 | No break | n.d. | No break |
| Notched Izod at -20 °C | kJ/m$^2$ | 1.76 | No break | n.d. | 13.96 |
| Falling weight E(break) at 23 °C | J | 0.56 | 8.02 | 9.89 | 7.99 |
| Falling weight E(break) at -20 °C | J | | 12.10 | n.d. | 12.10 |
| Flexural modulus | MPa | 1300 | 159 | n.d. | 187 |
| Melting temperature | °C | 152 | 110.4 | 108.5 | 110.0 |
| Mw | Dalton | | 69000 | 67300 | 79800 |
| Mw/Mn | - | | 2.6 | 2.6 | 5.4 |
| n.d. = not determined | | | | | |

A metallocene polypropylene (mPP1) was blended with three different polyethylenes mPE1, mPE2 and PE3. The metallocene polypropylene used was an isotactic homopolymer polypropylene commercially available from TOTAL® under the name "Lumicene® MR2002 ". Lumicene® MR2002 is a monomodal grade. Metallocene catalyst has been used for the production of mPE1 and mPE2, whereas PE3 was produced using high pressure radicalar production. mPE1 and mPE2 corresponded respectively to the grades M1820 and M1835 commercially available from TOTAL®. PE3 was used to produce comparative blends. PE3 corresponded to the grade LDPE 1022 FN24 commercially available from TOTAL®.

The characteristics of the polymers used in the example are given in table 1. From this table the $\alpha$ values of the blend can be calculated and are as follows:

- blend miPP1 - mPE1: $\alpha = 7.35$
- blend miPP1 - mPE2: $\alpha = 4.2$
- blend miPP1 - PE3: $\alpha = 6.39$

The blends were compounded on the Leistriz ZSE 18HPe twin-screw extruder in following conditions:

- screw diameter: 18 mm
- screw length/diameter ratio = 40
- imposed temperature profile along the screw (in °C): 200 - 210 - 215 - 220 - 220 - 215 - 210 - 210 (this last temperature is the one imposed at the die)

- screw speed: 250 rpm
- feeding rate: 2.0 kg/h

In such conditions, measured torque is regularly of the order of 40 Nm.

For mechanical properties evaluations, the blends were injected on the DR BOY 22A press in both tensile bars and 1 mm-squares samples. The blends rheological measurements were performed at 230 °C. Table 2 presents the specificity of the blend compositions.

Table 2: blends composition

|  | miPP1 | mPE1 | mPE2 | PE3 (comp) |
|---|---|---|---|---|
|  | wt% | wt% | wt% | wt% |
| B1 | 25 | 75 | - | - |
| B2 | 35 | 65 |  |  |
| B3 | 45 | 55 | - | - |
| B4 | 50 | 50 | - | - |
| B5 | 55 | 45 | - | - |
| B6 | 65 | 35 | - | - |
| B7 | 75 | 25 | - | - |
| B8 | 45 | - | 55 | - |
| B9 | 50 | - | 50 | - |
| B10 | 55 | - | 45 | - |
| B11 | 10 | - | - | 90 |
| B12 | 25 | - | - | 75 |
| B13 | 45 | - | - | 55 |
| B14 | 55 | - | - | 45 |
| B15 | 65 | - | - | 35 |
| B16 | 75 |  |  | 25 |

The properties obtained on the resulting blends are presented in tables 3 to 5.

Table 3: blends properties

|  | MFI 230 °C / 2.16 kg | Flexural Modulus |
|---|---|---|
|  | g/10 min | MPa |
| B1 | 5.90 | 386 |
| B2 | 6,50 | 546 |
| B3 | 7.60 | 665 |
| B4 | 8.34 | 736 |
| B5 | 9.00 | 814 |
| B6 | 9.90 | 917 |
| B7 | 11.10 | 1019 |
| B8 | 10.40 | 676 |
| B9 | 10.80 | 714 |
| B10 | 11.00 | 778 |

(continued)

|  | MFI 230 °C / 2.16 kg | Flexural Modulus |
|---|---|---|
|  | g/10 min | MPa |
| B11 | 4.90 | n.d. |
| B12 | 6.00 | 432 |
| B13 | 8.90 | 629 |
| B14 | 10.30 | 749 |
| B15 | 12.00 | 869 |
| B16 | 13,60 | 1000 |
| n.d.: not determined | | |

From the results of table 3, it can be seen that the melting temperature and the flexural modulus were kept at the same level between the inventive and comparative blends. The differences observed result from the starting polyethylene material.

Table 4: impact and ductility properties at 23°C

|  | Izod at 23 °C | Falling weight E(break) at 23 °C | ductile / fragile at 23 °C | Ductility index at 23 °C |
|---|---|---|---|---|
|  | kJ/m$^2$ | J |  | % |
| **miPP1** | **2.78** | **0.56** | **0/0/5** | **7.14** |
| B1 | 66.62 | 9.80 | 5/0/0 | 49.8 |
| B2 | 66,15 | 10.26 | 5/0/0 | 50.5 |
| B3 | 28.02 | 10.59 | 5/0/0 | 47.8 |
| B4 | 17.79 | 10.84 | 5/0/0 | 48.1 |
| B5 | 7.16 | 11.25 | 5/0/0 | 48.2 |
| B6 | 4.49 | 11.39 | 5/0/0 | 47.7 |
| B7 | 3.77 | 12.44 | 5/0/0 | 46.8 |
| **mPE1** | **No break** | **8.02** | **5/0/0** | **43.6** |
| B8 | 34.19 | 10.56 | 5/0/0 | 49.3 |
| B9 | 19.70 | 10.82 | 5/0/0 | 49.3 |
| B10 | 12.30 | 10.82 | 5/0/0 | 47.6 |
| **mPE2** | **n.d.** | **9.89** | **ductile** | **61.4** |
| B12 | 59.88 | 6,17 | 2/3/0 | 33.4 |
| B13 | 3.92 | 3.61 | 0/2/3 | 11.3 |
| B14 | 3.53 | 4.70 | 0/1/4 | 9.1 |
| B15 | 2.94 | 5.14 | 0/0/5 | 6.8 |
| B16 | 2.80 | 4.67 | 0/0/5 | 4.7 |
| **PE3** | **No break** | **7.99** | **5/0/0** | **41.0** |

As it can be seen from table 4, surprising results are observed regarding the falling weight at 23 °C impact property. A synergetic effect can be observed between miPP and mPE so that the energy at break for the inventive blends B1 to B10 show higher values than the ones of the components of the blend taken alone. This synergetic effect is not achieved for the comparative blends B12 to B16 (i.e. with miPP and PE).

Also for the inventive blends B1 to B10, only ductile breaks are observed and the ductility index is always above 40%. These good results are achieved with a content of mPE as low as 25 wt% only in the blend (see B7). To the contrary, for the comparative blends no ductile break is observed with a content of 35 wt% of PE (see B15) or lower (see B16). The ductility index is always below 35%.

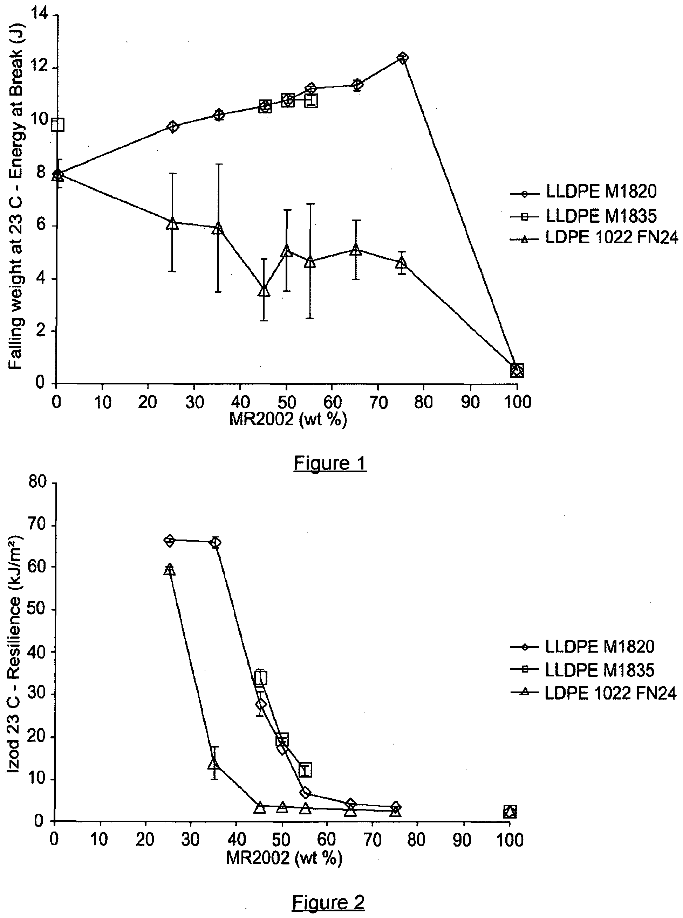

Figure 1 shows the curves for the falling weight at 23 °C - Energy at break (J) as a function of the weight content of the miPP in the blends.

The notched Izod resilience at 23 °C is also more interesting when blends with metallocene polyethylene grades are considered rather than blend with LDPE grades. This is especially visible for miPP content ranging between 35 and 55 wt% as it can be seen in Figure 2.

The ductility index is determined at 23 °C and according to the following equation:

$$\text{Ductility index (\%)} = \frac{E(break) - E(peak)}{E(break)} \, x100 \quad (IV)$$

wherein E(break) is the falling weight average energy at break (in Joule) as determined at 23 °C and E(peak) is the falling weight average energy at peak (in Joule) as determined at 23 °C.

By default, a ductility index lower or equal to 10 is associated with "fragile break"; a value ranging between 10 and 35 corresponds to an intermediate break; above 35, the break is ductile.

Table 5: impact and ductility properties at -20°C

| | Izod at -20 °C | Falling weight E(break) at -20 °C | ductile / fragile at -20 °C | Ductility index at -20 °C |
|---|---|---|---|---|
| | kJ/m$^2$ | J | | % |
| B1 | 65.61 | 13.77 | 5/0/0 | 43.5 |
| B2 | 6.02 | 14.11 | 5/0/0 | 43.0 |
| B3 | 3.23 | 14.67 | 5/0/0 | 41.9 |
| B4 | 3.08 | 13.23 | 0/5/0 | 35.0 |
| B5 | 3.24 | 10.20 | 0/5/0 | 20.0 |
| B6 | 2.59 | 6.11 | 0/0/5 | 5.4 |
| B7 | 2.25 | 5.99 | 0/0/5[1] | 5.3 |
| B8 | 3.49 | 14.37 | 5/0/0 | 41.4 |
| B9 | 2.87 | 12.88 | 0/5/0 | 32.5 |
| B10 | 2.72 | 11.49 | 0/5/0 | 27.4 |
| B12 | 4.70 | n.d | n.d | n.d |
| B13 | 2.22 | n.d | n.d | n.d |
| B14 | 1.83 | n.d | n.d | n.d |
| B15 | 1.43 | n.d | n.d | n.d |
| B16 | 1.51 | n.d | n.d | n.d |
| (1) Measured at 0°C<br>n.d. = not determined | | | | |

For the inventive blends, with a miPP content of 45 wt% or lower, the falling weight impact remains ductile, an intermediate behaviour is observed with a miPP content ranging between 50 and 55 wt%, and fragile breaks are observed for higher miPP content. Such behaviours are better than the one of the comparative blends. Indeed, as intermediate and fragile breaks were observed at 23 °C there is no chance to obtain ductile breaks at -20 °C.

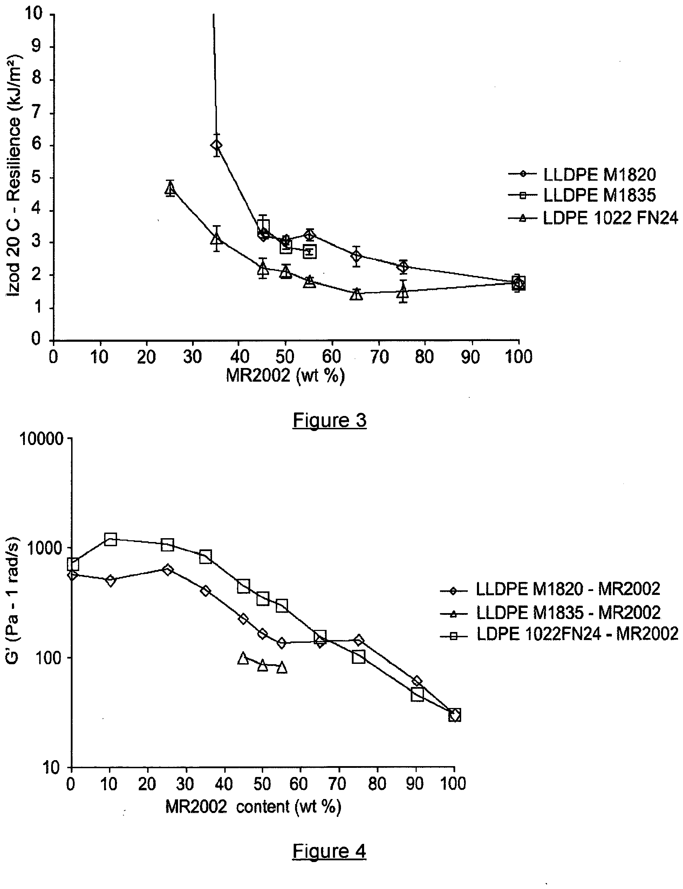

For the notched izod properties at -20 °C, the interest for mPE grades within the blends is also confirmed as shown in Figure 3.

The ductility index is determined at -20°C and according to the following equation:

$$\text{Ductility index (\%)} = \frac{E(break) - E(peak)}{E(break)} \, x100 \quad \text{(IV)}$$

wherein E(break) is the falling weight average energy at break (in Joule) as determined at - 20 °C and E(peak) is the falling weight average energy at peak (in Joule) as determined at - 20 °C.

By default, a ductility index lower or equal to 10 is associated with "fragile break"; a value ranging between 10 and 35 corresponds to an intermediate break; above 35, the break is ductile.

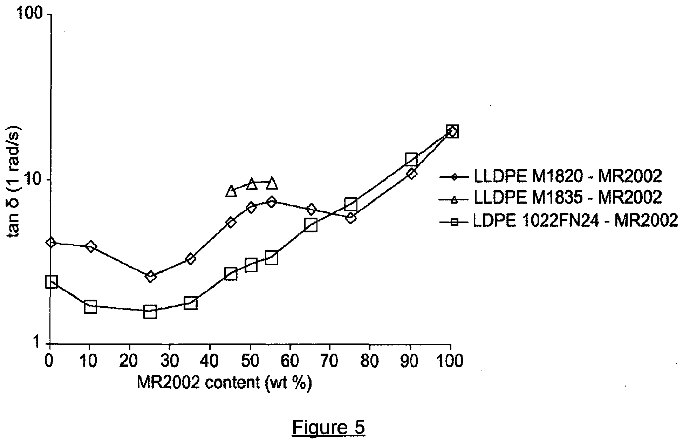

Co-continuity of the phases of the phases in the inventive blend has been evidenced in figures 4 and 5, using the rheological approach, for the blends comprising an isotactic polypropylene content ranging from 25 to 55 weight percent relative to the total weight of both the polyethylene and the polypropylene contained in the blend.

These figures present the evolution of the elastic modulus and of "tan $\delta$" at 1 rad/s as a function of the iPP content. Such representations are proposed in "Comparison of Methods for the Detection of Cocontinuity in Poly(ethylene oxide)/Polystyrene Blends" J. A. GALLOWAY and C. W. MACOSKO in POLYMER ENGINEERING AND SCIENCE, APRIL 2004, Vol. 44, No. 4 as very sensitive (amongst rheological criterions) to highlight the range of co-continuous morphology. Using this representation, the composition limits delimiting the co-continuous morphology correspond to the local maxima of G' = f(iPP content). A co-continuous morphology is thus clearly observed for the inventive blend and in particular for Lumicene® LLDPE M1820-MR2002 blends containing a polyethylene/polypropylene content ranging between 25 wt % and 55 wt %.

**Claims**

1. Blend of at least one single-site catalyst polyethylene and at least one single-site catalyst isotactic polypropylene **characterized in that** the blend :

   - comprises an isotactic polypropylene content ranging from 25 to 55 weight percent relative to the total weight of both the polyethylene and the polypropylene contained in the blend, and **in that**
   - the at least one single-site catalyst polyethylene and the at least one single-site catalyst isotactic polypropylene are selected to fulfil the relationship:

$$\text{MFI}_{PP} = \alpha \ \text{MI2}_{PE} \ \text{(I)}$$

   with $\alpha$ ranging from 2.0 to 9.0, $\text{MI2}_{PE}$ being the melt flow index of the polyethylene as measured according to ISO 1133 at 190 °C under a load of 2.16 kg and $\text{MFI}_{PP}$ being the melt flow index of the isotactic polypropylene as measured according to ISO 1133 at 230 °C under a load of 2.16 kg.

2. Blend according to claim 1 **characterized in that** $\alpha$ is:

   - at most 8.5, preferably at most 7.5, and/or
   - at least 3.0, preferably at least 4.0.

3. Blend according to any one of claims 1 or 2 **characterized in that** the content of isotactic polypropylene is:

   - at most 50 wt% relative to the total weight of both the polyethylene and the isotactic polypropylene contained in the blend, and/or
   - at least 30 wt% relative to the total weight of both polyethylene and isotactic polypropylene contained in the blend.

4. Blend according to any one of claims 1 to 3 **characterized in that** both the polyethylene and the isotactic polypropylene have a molecular weight distribution Mw/Mn of at most 5 and/or of at least 2.1.

5. Blend according to any one of claims 1 to 4 **characterized in that** the polyethylene has a MI2 of at least 1.5 g/10 min as measured according to ISO 1133 at 190 °C under a load of 2.16 kg.

6. Blend according to any one of claims 1 to 5 **characterized in that** the isotactic polypropylene has a MFI$_{PP}$ of at least 10 g/10 min, preferably of at least 12 g/10 min, more preferably of at least 14 g/10 min as measured according to ISO 1133 at 230 °C under a load of 2.16 kg.

7. Blend according to any one of claims 1 to 6 **characterized in that** the polyethylene and/or the isotactic polypropylene have a monomodal molecular weight distribution.

8. Blend according to any one of claims 1 to 7 **characterized in that** the at least one single-site catalyst catalysed isotactic polypropylene in the blend is an isotactic polypropylene-based composition comprising at least one single-site catalyst catalysed isotactic polypropylene and from 0.1 to 30 wt% of a syndiotactic polypropylene as based on the total weight of the isotactic polypropylene-based composition.

9. Blend according to any one of claims 1 to 8 **characterized in that** the blend further comprises from 0.1 wt% to 50 wt% of a filler as based on the total weight of the blend, preferably the filler comprises one or more reinforcement material selected from glass fibres and carbon nanotubes.

10. Blend according to any one of claims 1 to 9, wherein the isotactic polypropylene and the polyethylene are in co-continuous phases.

11. Blend according to any one of claims 1 to 10, wherein the blend has a ductility index determined at 23 °C of at least 35%, preferably at least 40%, the ductility index being calculated to the following equation (II):

$$\text{Ductility index (\%)} = \frac{E(break) - E(peak)}{E(break)} \; x100 \quad (II)$$

wherein E(break) is the falling weight average energy at break as determined at 23 °C and E(peak) is the falling weight average energy at peak as determined at 23 °C.

12. Article produced from the blend according to any one of claims 1 to 11, preferably

- the article is a thermoformed article or a moulded article selected from injection moulded article, compression moulded article, rotomoulded article, injection blow moulded article, and injection stretch blow moulded article, and/or
- the article is selected from the group consisting of automobile parts, food or non-food packaging, retort packaging, housewares, caps, closures, media packaging, medical devices and pharmacopoeia packages.

13. Process for the production of a blend comprising the steps of:

- providing at least one isotactic polypropylene produced in the presence of a single-site catalyst in one or more reactors;
- providing at least one polyethylene produced in the presence of a single-site catalyst in one or more reactors;
- blending said at least one isotactic polypropylene together with said at least one polyethylene to produce a blend comprising an isotactic polypropylene content ranging from 25 to 55 weight percent relative to the total weight of both the polyethylene and the polypropylene contained in the blend, wherein the at least one single-site catalyst polyethylene and the at least one single-site catalyst isotactic polypropylene are selected to fulfil the relationship:

$$\text{MFI}_{PP} = \alpha \; \text{MI2}_{PE} \; (I)$$

with $\alpha$ ranging from 2.0 to 9.0, $\text{MI2}_{PE}$ being the melt flow index of the polyethylene as measured according to ISO 1133 at 190 °C under a load of 2.16 kg and $\text{MFI}_{PP}$ being the melt flow index of the isotactic polypropylene as measured according to ISO 1133 at 230 °C under a load of 2.16 kg.

14. Process according to claim 13, wherein the polyolefin blend is a blend according to any of claims 2 to 11.

15. Process according to any one of claims 13 or 14 wherein:

- said at least one isotactic polypropylene and/or said at least one polyethylene are produced in a loop reactor, and/or
- the blending of said at least one isotactic polypropylene together with said at least one polyethylene to produce a blend is a physical blending, and/or
- the process has no step of blending a compatiliser selected from polypropylene grafted with maleic anhydride, polyethylene grafted with maleic anhydride, ethylene-vinyl acetate grafted with maleic anhydride, ethylene-octene copolymer (POE), ethylene-propylene rubber (EPR), ethylene-propylene diene rubber (EPDM) styrene-ethylene/butylene-styrene (SEBS) or any mixture thereof, together with said at least one isotactic polypropylene and/or said at least one polyethylene.

**Patentansprüche**

1. Mischung aus mindestens einem Single-Site-Katalysator-Polyethylen und mindestens einem isotaktischen Single-Site-Katalysator-Polypropylen, **dadurch gekennzeichnet, dass** die Mischung:

   - einen Gehalt an isotaktischem Polypropylen im Bereich von 25 bis 55 Gewichtsprozent, bezogen auf das Gesamtgewicht von in der Mischung enthaltenem Polyethylen und Polypropylen umfasst, und dadurch, dass
   - das mindestens eine Single-Site-Katalysator-Polyethylen und das mindestens eine isotaktische Single-Site-Katalysator-Polypropylen ausgewählt werden, um die Beziehung:

$$MFI_{PP} = \alpha\ MI2_{PE}\ (I)$$

   mit $\alpha$ im Bereich von 2,0 bis 9,0 zu erfüllen, wobei $MI2_{PE}$ der Schmelzflussindex des Polyethylens ist, gemessen gemäß ISO 1133 bei 190 °C unter einer Last von 2,16 kg, und $MFI_{PP}$ der Schmelzflussindex des isotaktischen Polypropylens ist, gemessen gemäß ISO 1133 bei 230 °C unter einer Last von 2,16 kg.

2. Mischung nach Anspruch 1, **dadurch gekennzeichnet, dass** a:

   - höchstens 8,5, vorzugsweise höchstens 7,5 und/oder
   - mindestens 3,0, vorzugsweise mindestens 4,0 ist.

3. Mischung nach einem der Ansprüche 1 oder 2, **dadurch gekennzeichnet, dass** der Gehalt an isotaktischem Polypropylen:

   - höchstens 50 Gew.-% bezogen auf das Gesamtgewicht von in der Mischung enthaltenem Polyethylen und isotaktischem Polypropylen, und/oder
   - mindestens 30 Gew.-% bezogen auf das Gesamtgewicht von in der Mischung enthaltenem Polyethylen und isotaktischem Polypropylen beträgt.

4. Mischung nach einem der Ansprüche 1 bis 3, **dadurch gekennzeichnet, dass** sowohl das Polyethylen als auch das isotaktische Polypropylen eine Molekulargewichtsverteilung Mw/Mn von höchstens 5 und/oder mindestens 2,1 aufweisen.

5. Mischung nach einem der Ansprüche 1 bis 4, **dadurch gekennzeichnet, dass** das Polyethylen einen MI2 von mindestens 1,5 g/10 min aufweist, gemessen gemäß ISO 1133 bei 190 °C unter einer Last von 2,16 kg.

6. Mischung nach einem der Ansprüche 1 bis 5, **dadurch gekennzeichnet, dass** das isotaktische Polypropylen einen $MFI_{PP}$ von mindestens 10 g/10 min, vorzugsweise von mindestens 12g/10min, mehr bevorzugt von mindestens 14g/10min aufweist, gemessen gemäß ISO 1133 bei 230 °C unter einer Last von 2,16 kg.

7. Mischung nach einem der Ansprüche 1 bis 6, **dadurch gekennzeichnet, dass** das Polyethylen und/oder das isotaktische Polypropylen eine monomodale Molekulargewichtsverteilung aufweisen.

8. Mischung nach einem der Ansprüche 1 bis 7, **dadurch gekennzeichnet, dass** das mindestens eine durch einen Single-Site-Katalysator katalysierte isotaktische Polypropylen in der Mischung eine auf isotaktischem Polypropylen basierende Zusammensetzung ist, die mindestens ein durch einen Single-Site-Katalysator katalysiertes, isotaktisches Polypropylen und 0,1 bis 30 Gew.-% eines syndiotaktischen Polypropylens umfasst, bezogen auf das Gesamtgewicht der auf isotaktischem Polypropylen basierenden Zusammensetzung.

9. Mischung nach einem der Ansprüche 1 bis 8, **dadurch gekennzeichnet, dass** die Mischung ferner 0,1 Gew.-% bis 50 Gew.-% eines Füllstoffs bezogen auf das Gesamtgewicht der Mischung umfasst; vorzugsweise der Füllstoff ein oder mehrere Verstärkungsmaterialien, ausgewählt aus Glasfasern und Kohlenstoffnanoröhren, umfasst.

10. Mischung nach einem der Ansprüche 1 bis 9, wobei das isotaktische Polypropylen und das Polyethylen in co-kontinuierlichen Phasen vorliegen.

11. Mischung nach einem der Ansprüche 1 bis 10, wobei die Mischung einen bei 23 °C bestimmten Duktilitätsindex von mindestens 35 %, vorzugsweise mindestens 40 % aufweist, wobei der Duktilitätsindex mit der folgenden Gleichung (II) berechnet wird:

$$\text{Duktilitätsindex (\%)} = \frac{E(Bruch) - E(Spitze)}{E(Bruch)} \times 100 \ (II)$$

wobei E(Bruch) die bei 23 °C bestimmte mittlere Energie des fallenden Gewichts beim Bruch ist und E(Spitze) die bei 23 °C bestimmte mittlere Energie des fallenden Gewichts am Maximum ist.

12. Artikel, hergestellt aus der Mischung nach einem der Ansprüche 1 bis 11, vorzugsweise

- ist der Artikel ein thermogeformter Artikel oder ein geformter Artikel, ausgewählt aus einem spritzgegossenen Artikel, einem formgepressten Artikel, einem rotationsgeformten Artikel, einem spritzblasgeformten Artikel und einem spritzstreckblasgeformten Artikel, und/oder
- ist der Artikel ausgewählt aus der Gruppe, bestehend aus Automobilteilen, Verpackungen für Lebensmittel oder Nichtlebensmittel, Retort-Verpackungen, Haushaltswaren, Kappen, Verschlüssen, Medienverpackungen, medizinischen Vorrichtungen und Pharmakopöe-Verpackungen.

13. Verfahren zur Herstellung einer Mischung, umfassend die Schritte:

- Bereitstellen von mindestens einem isotaktischen Polypropylen, das in Gegenwart eines Single-Site-Katalysators in einem oder mehreren Reaktoren hergestellt wird;
- Bereitstellen von mindestens einem Polyethylen, das in Gegenwart eines Single-Site-Katalysators in einem oder mehreren Reaktoren hergestellt wird;
- Vermischen des mindestens einen isotaktischen Polypropylens mit dem mindestens einen Polyethylen, um eine Mischung herzustellen, die einen Gehalt an isotaktischem Polypropylen im Bereich von 25 bis 55 Gewichtsprozent bezogen auf das Gesamtgewicht von in der Mischung enthaltenem Polyethylen und Polypropylen umfasst, wobei das mindestens eine Single-Site-Katalysator Polyethylen und das mindestens eine isotaktische Single-Site-Katalysator-Polypropylen ausgewählt werden, um die Beziehung:

$$MFI_{PP} = \alpha \ MI2_{PE} \ (I)$$

mit $\alpha$ im Bereich von 2,0 bis 9,0 zu erfüllen, wobei $MI2_{PE}$ der Schmelzflussindex des Polyethylens ist, gemessen gemäß ISO 1133 bei 190 °C unter einer Last von 2,16 kg, und $MFI_{PP}$ der Schmelzflussindex des isotaktischen Polypropylens ist, gemessen gemäß ISO 1133 bei 230 °C unter einer Last von 2,16 kg.

14. Verfahren nach Anspruch 13, wobei die Polyolefinmischung eine Mischung nach einem der Ansprüche 2 bis 11 ist.

15. Verfahren nach einem der Ansprüche 13 oder 14, wobei:

- das mindestens eine isotaktische Polypropylen und/oder das mindestens eine Polyethylen in einem Schlaufenreaktor hergestellt werden und/oder
- das Vermischen des mindestens einen isotaktischen Polypropylens mit dem mindestens einen Polyethylen zur Herstellung einer Mischung ein physikalisches Vermischen ist und/oder
- das Verfahren keinen Schritt des Vermischens eines Kompatibilisators, der aus mit Maleinsäureanhydrid gepfropftem Polypropylen, mit Maleinsäureanhydrid gepfropftem Polyethylen, mit Maleinsäureanhydrid gepfropftem Ethylenvinylacetat, Ethylen-Octen-Copolymer (POE), Ethylen-Propylen-Kautschuk (EPR), Ethylen-Propylen-Dien-Kautschuk (EPDM), Styrol-Ethylen/Butylen-Styrol (SEBS) oder einer beliebigen Mischung davon ausgewählt ist, mit dem mindestens einen isotaktischen Polypropylen und/oder dem mindestens einen Polyethylen aufweist.

## Revendications

1. Mélange d'au moins un polyéthylène de catalyseur monosite et d'au moins un polypropylène isotactique de catalyseur monosite, **caractérisé en ce que** le mélange :

   - comprend une teneur en polypropylène isotactique allant de 25 à 55 % en poids par rapport au poids total du polyéthylène et du polypropylène contenus dans le mélange, et **en ce que**
   - l'au moins un polyéthylène de catalyseur monosite et l'au moins un polypropylène isotactique de catalyseur monosite sont choisis pour vérifier la relation :

$$IFC_{PP} = \alpha\ MI2_{PE}\ (I)$$

   où a est compris entre 2,0 et 9,0, $MI2_{PE}$ représentant l'indice de fluidité à chaud du polyéthylène, mesuré selon la norme ISO 1133 à 190 °C sous une charge de 2,16 kg et $IFC_{PP}$ représentant l'indice de fluidité à chaud du polypropylène isotactique, mesuré selon l'ISO 1133 à 230 °C sous une charge de 2,16 kg.

2. Mélange selon la revendication 1 **caractérisé en ce que** $\alpha$ vaut :

   - au plus 8,5, de préférence au plus 7,5 et/ou
   - au moins 3,0, de préférence au moins 4,0.

3. Mélange selon l'une quelconque des revendications 1 ou 2 **caractérisé en ce que** la teneur en polypropylène isotactique représente :

   - au plus 50 % en poids par rapport au poids total du polyéthylène et du polypropylène isotactique contenus dans le mélange, et/ou
   - au moins 30 % en poids par rapport au poids total du polyéthylène et du polypropylène isotactique contenus dans le mélange.

4. Mélange selon l'une quelconque des revendications 1 à 3, **caractérisé en ce que** le polyéthylène et le polypropylène isotactique ont tous deux une distribution de masse moléculaire Mw/Mn d'au plus 5 et/ou d'au moins 2,1.

5. Mélange selon l'une quelconque des revendications 1 à 4, **caractérisé en ce que** le polyéthylène a un MI2 d'au moins 1,5 g/10 min, mesuré selon la norme ISO 1133 à 190 °C sous une charge de 2,16 kg.

6. Mélange selon l'une quelconque des revendications 1 à 5, **caractérisé en ce que** le polypropylène isotactique a un $IFC_{PP}$ d'au moins 10 g/10 min, de préférence d'au moins 12 g/10 min, ou mieux d'au moins 14 g/10 min mesuré selon l'ISO 1133 à 230 °C sous une charge de 2,16 kg.

7. Mélange selon l'une quelconque des revendications 1 à 6, **caractérisé en ce que** le polyéthylène et/ou le polypropylène isotactique ont une distribution de masse moléculaire monomodale.

8. Mélange selon l'une quelconque des revendications 1 à 7, **caractérisé en ce qu'**au moins un polypropylène isotactique catalysé par un catalyseur monosite dans le mélange est une composition à base de polypropylène isotactique comprenant au moins un polypropylène isotactique catalysé par un catalyseur monosite et de 0,1 à 30 % en poids d'un polypropylène syndiotactique par rapport au poids total de la composition à base de polypropylène isotactique.

9. Mélange selon l'une quelconque des revendications 1 à 8, **caractérisé en ce que** le mélange comprend en outre de 0,1 % en poids à 50 % en poids d'une charge par rapport au poids total du mélange, de préférence la charge comprend au moins un matériau de renforcement choisi parmi des fibres de verre et des nanotubes de carbone.

10. Mélange selon l'une quelconque des revendications 1 à 9, dans lequel le polypropylène isotactique et le polyéthylène sont en phases co-continues.

11. Mélange selon l'une quelconque des revendications 1 à 10, dans lequel le mélange a un indice de ductilité déterminé à 23 °C d'au moins 35 %, de préférence d'au moins 40 %, l'indice de ductilité étant calculé selon l'équation suivante (II) :

$$\text{Indice de ductilité (\%)} = \frac{E(rupture) - E(max)}{E(rupture)} \times 100 \text{ (II)}$$

dans laquelle E(rupture) représente l'énergie moyenne de poids en chute à la rupture, déterminée à 23 °C, et où E(max) représente l'énergie moyenne de poids en chute au maximum, déterminée à 23 °C.

12. Article produit à partir du mélange selon l'une quelconque des revendications 1 à 11, l'article

- étant de préférence un article thermoformé ou un article moulé choisi parmi un article moulé par injection, un article moulé par compression, un article rotomoulé, un article moulé par soufflage par injection et un article moulé par soufflage par étirement par injection, et/ou
- étant choisi dans le groupe constitué par les pièces automobiles, les emballages alimentaires ou non alimentaires, les emballages thermosoudés, les articles ménagers, les bouchons, les fermetures, les emballages de contenus multimédia, les dispositifs médicaux et les emballages de pharmacopée.

13. Procédé de fabrication d'un mélange comprenant les étapes consistant à :

- utiliser au moins un polypropylène isotactique produit en présence d'un catalyseur monosite dans au moins un réacteur ;
- utiliser au moins un polyéthylène produit en présence d'un catalyseur monosite dans au moins un réacteur ;
- mélanger ledit au moins un polypropylène isotactique avec ledit au moins un polyéthylène pour produire un mélange comprenant une teneur en polypropylène isotactique allant de 25 à 55 % en poids par rapport au poids total à la fois du polyéthylène et du polypropylène contenus dans le mélange, au moins un polyéthylène de catalyseur monosite et au moins un polypropylène isotactique de catalyseur monosite étant choisis pour vérifier la relation :

$$\text{IFC}_{PP} = \alpha \text{ MI2}_{PE} \text{ (I)}$$

où $\alpha$ est compris entre 2,0 et 9,0, MI2$_{PE}$ étant l'indice de fluidité du polyéthylène mesuré selon la norme ISO 1133 à 190 °C sous une charge de 2,16 kg et IFC$_{PP}$ étant l'indice de fluidité à chaud du polypropylène isotactique mesuré selon la norme ISO 1133 à 230 °C sous une charge de 2,16 kg.

14. Procédé selon la revendication 13, dans lequel le mélange de polyoléfines est un mélange selon l'une quelconque des revendications 2 à 11.

15. Procédé selon l'une quelconque des revendications 13 ou 14, dans lequel :

- ledit au moins un polypropylène isotactique et/ou ledit au moins un polyéthylène sont produits dans un réacteur à boucle, et/ou
- le mélange dudit au moins un polypropylène isotactique avec ledit au moins un polyéthylène pour produire un mélange est un mélange physique, et/ou
- le procédé ne comprend pas d'étape consistant à mélanger un agent de compatibilité choisi parmi du polypropylène greffé avec de l'anhydride maléique, du polyéthylène greffé avec de l'anhydride maléique, de l'éthylène-acétate de vinyle greffé avec de l'anhydride maléique, un copolymère éthylène-octène (POE), du caoutchouc éthylène-propylène (EPR), du caoutchouc éthylène-propylène-diène (EPDM), du styrène-éthylène/butylène-styrène (SEBS) ou tout mélange de ceux-ci, avec ledit au moins un polypropylène isotactique et/ou ledit au moins un polyéthylène.

Figure 1

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1495861 A
- WO 200011078 A
- WO 2012001160 A2
- US 6184326 B
- WO 2012001160 A

### Non-patent literature cited in the description

- Plastics Additives Handbook. Hanser Publishers, 2001, 181-212
- **A. RAZAVI.** *Macromol. Symp.,* vol. 89, 345-367
- **G.J. RAY et al.** *Macromolecules,* 1977, vol. 10 (4), 773-778
- **H.N. CHENG ; J. EWEN.** *Makromol. Chem.,* 1989, vol. 190, 1931-1940
- **PHILIPPE JONNARD.** Preparation des echantillons pour MEB et microanalyse. EDP Sciences
- Polymer Microscopy. Chaoman and Hall
- **J. A. GALLOWAY ; C. W. MACOSKO.** Comparison of Methods for the Detection of Cocontinuity in Poly(ethylene oxide)/Polystyrene Blends. *POLYMER ENGINEERING AND SCIENCE,* April 2004, vol. 44 (4